# EUROPÄISCHE PATENTSCHRIFT

(11) **EP 0 891 214 B1**
(45) Veröffentlichungstag und Bekanntmachung des Hinweises auf die Patenterteilung: **16.05.2001**
(21) Anmeldenummer: 97908277.3
(22) Anmeldetag: 21.03.1997
(51) Int. Cl.: B01D 29/15, B01D 46/24

(54) **FILTERVORRICHTUNG**
FILTER
FILTRE

(30) Priorität: 06.04.1996 DE 19613847
(43) Veröffentlichungstag der Anmeldung: 20.01.1999
(73) Patentinhaber: HYDAC FILTERTECHNIK GMBH, D-66280 Sulzbach (DE)
(72) Erfinder: MEES, Harald, D-66822 Lebach (DE); SAKRASCHINSKY, Michael, D-66386 St. Ingbert (DE)
(74) Vertreter: Patentanwälte Bartels und Partner
(86) Internationale Anmeldenummer: EP9701423
(87) Internationale Veröffentlichungsnummer: WO9737743

(56) Entgegenhaltungen:
- EP-A- 0 547 291
- WO-A-96/15841
- US-A- 4 128 251

## Beschreibung

Die Erfindung betrifft eine Filtervorrichtung mit einem mehrteiligen Filtergehäuse, das einen Filterkopf aufweist, der mit einem Filtertopf verbindbar ist, der mindestens ein Filterelement aufweist, das ein Stützrohr hat, das von einer Filtermatte umgeben ist, die an ihren freien Enden mit Elementaufnahmen versehen ist, wobei mindestens eine der Elementaufnahmen fest mit dem Stützrohr verbunden und in Anlage mit dem Filterkopf bringbar ist und wobei zumindest an dem Ende der Filtermatte, das die mit dem Filterkopf verbundene Elementaufnahme aufweist, zwischen dieser und diesem Ende der Filtermatte ein Zwischenstück angeordnet ist, das zusammen mit der Filtermatte von dem Stützrohr entfernbar ist, das mit dem Filterkopf verbunden an diesem verbleibt.

Dahingehende Filtervorrichtungen, wie sie beispielsweise durch die EP 0 547 291 A1 bekannt sind, dienen hauptsächlich dazu, verschmutztes Fluid, insbesondere Hydrauliköl, von den Verschmutzungen zu befreien. Hierzu tritt das verschmutzte Fluid über eine Eintrittsöffnung in die Filtervorrichtung und durchströmt das jeweilige Filterelement von außen nach innen, wobei sich die Filtermatte an dem Stützrohr in Form eines durchlässigen Hohlzylinders abstützt. Die Verschmutzungen verbleiben in der Filtermatte und das gereinigte Fluid verläßt die Filtervorrichtung über eine Austrittsöffnung. Ist die Filtermatte von den Verschmutzungen zugesetzt, was sich in der Regel über einen Anstieg des Differenzdruckes feststellen läßt, ist bei den bekannten Lösungen ein Austausch des Filterelementes notwendig.

Zum Wechseln des Filterelementes wird der Filtertopf vom Filterkopf abgeschraubt und die mit Verschmutzungen zugesetzte Filtermatte gegen eine neue ausgetauscht, indem diese mit ihrem jeweiligen Zwischenstück von dem Stützrohr abgezogen wird, das zusammen mit der zugeordneten Elementaufnahme am Filterkopf verbleibt. Die Kosten für einen Filtermattenwechsel sind dadurch reduziert und die Umwelt wird weniger belastet, da die in Rede stehenden Filtermatten ohne weiteres recyclebar sind.

Bei sehr hohen Fluiddifferenzdrücken kommt es jedoch bei diesen bekannten Lösungen im Bereich der Elementaufnahmen für das Filterelement aufgrund der dort vorhandenen geringen Abstützkräfte zu Problemen, die zu einem Versagen der gesamten Filtervorrichtung führen können. Die Dichtheit in diesem Aufnahmebereich kann reduziert sein und Leckagestellen sind nicht zu vermeiden. Des weiteren ist nicht auszuschließen, daß es zu einer Stauchung des Filterpaketes mit den damit bekannten Nachteilen kommt.

Durch die EP-A-0 547 291 ist eine gattungsgemäße Filtervorrichtung bekannt, bei der sich das Filterelement endseitig an Elementaufnahmen des Filtergehäuses abstützt. Die dahingehenden Elementaufnahmen sind als Dichtplatten oder Dichtränder ausgebildet, um derart eine sichere Abdichtung zwischen dem Inneren des Filterelementes und seiner Umgebung innerhalb des Filtertopfes zu gewährleisten. Auch in diesem Fall kann es bei sehr hohen Fluiddifferenzdrücken im Bereich der Elementaufnahmen aufgrund der dort vorhandenen geringen Abstützkräfte über die Elementaufnahmen zu Dichtigkeitsproblemen und ungewollt zu Leckagestellen kommen.

Ausgehend von diesem Stand der Technik liegt der Erfindung die Aufgabe zugrunde, die vorbeschriebenen Nachteile im Stand der Technik zu vermeiden. Eine dahingehende Aufgabe löst eine Filtervorrichtung mit den Merkmalen des Anspruches 1 in seiner Gesamtheit.

Dadurch, daß gemäß dem kennzeichnenden Teil des Anspruches 1 zumindest zwischen einem Teil der Zwischenstücke und den zugeordneten Elementaufnahmen bei auf dem Stützrohr aufgesetzter Filtermatte in axialer Aufsetzrichtung eine Fluiddurchtrittsstelle in Form eines Spaltes besteht, die nach Inbetriebnahme durch den anstehenden Fluiddifferenzdruck schließbar ist, ist insgesamt eine axiale Abstützung der Endkappen des zylindrischen Filterelementes erreicht, was es erlaubt, auch hohe Differenzdrücke sicher zu bewältigen. Des weiteren kommt es nach Schließen der möglichen Fluiddurchtrittsstelle unter der durch den Fluiddifferenzdruck bewirkten Vorspannung zu einer erhöhten Dichtheit in den Bereichen der Filteraufnahme, so daß Leckagen mit Sicherheit vermieden sind. Bei eventuell hinreichend bestehender Vorspannung des Filterpaketes kann der angesprochene Spalt gegen Null gehen, eine fiktive Durchtrittsstelle bleibt dennoch bestehen.

Die zum Einsatz kommenden Filtermatten können auch ohne unterstützendes Drahtgewebe aus einfachen Papierelementen hergestellt sein; höherwertige Elemente jedoch haben einen mehrlagigen Mattenaufbau aus verschiedensten Materialien, wobei die Filtermatte auch plissiert ausgelegt sein kann.

Bei einer bevorzugten Ausführungsform der erfindungsgemäßen Filtervorrichtung ist die mit dem Filterkopf verbundene Elementaufnahme integrierter Bestandteil des Filtergehäuses oder mit radialer Vorspannung auf einen Innenstutzen des Filterkopfes aufschiebbar. Bei integrierter Auslegung verbleibt die dem Filterkopf zugewandte Elementaufnahme zusammen mit dem Stützrohr auf jeden Fall an diesem. Beim Aufschieben der Elementaufnahme auf einen zugeordneten Innenstutzen des Filterkopfes ist die Elementaufnahme lösbar mit dem Filterkopf verbunden und läßt sich zusammen mit dem Stützrohr entfernen. Zur Erzeugung der radialen Vorspannung kann ein zwischen Innenstutzen des Filterkopfes und der Elementaufnahme vorgespannter O-Ring dienen.

Bei einer weiteren bevorzugten Ausführungsform der erfindungsgemäßen Filtervorrichtung übergreift das zwischen der mit dem Filtergehäuse verbundenen Elementaufnahme und dem Filtermattenende angeordnete Zwischenstück kappenartig dieses Filtermattenende und ist lösbar mit dieser Elementaufnahme, vorzugsweise über einen Spannring, verbunden, wobei zusätzlich oder alternativ in axialer Aufsetzrichtung der Filtermatte das Zwischenstück eine elastisch nachgiebige Dichtung aufweist, die in Anlage mit der Elementaufnahme bringbar ist. Nach Lösen des Spannringes läßt sich derart die Filtermatte zusammen mit dem Zwischenstück von der Elementaufnahme und dem Stützrohr entfernen.

Bei einer weiteren bevorzugten Ausführungsform der erfindungsgemäßen Filtervorrichtung weist die mit dem Filterkopf verbindbare Elementaufnahme Mitnehmerelemente auf, die unter der Wirkung eines Kraftspeichers in Anlage mit dem Filtertopf bringbar sind. Hierdurch läßt sich bei geringer Relativbewegung des Filterelementes gegenüber dem Filtertopf gleichzeitig mit dem Ab- und Aufschrauben des Filtertopfes das Filterelement aus dem Filtergehäuse entfernen bzw. einsetzen. Sofern die angesprochenen Mitnehmerelemente Teil mindestens eines Zwischenstückes sind, kann wiederum die Elementaufnahme mit dem Stützrohr im Gehäuse verbleiben und nur die Filtermatte wird mit den mit ihr verbundenen Zwischenstücken entfernt.

Vorzugsweise ist dabei das dem Filterkopf abgewandte Ende des Filterelementes von einer Elementaufnahme abgeschlossen, die mehrteilig ausbildbar ist und dabei das jeweils zugeordnete Zwischenstück kappenartig umfaßt. Vorzugsweise ist dabei vorgesehen, daß die jeweiligen Zwischenstücke über eine Rastverbindung mit den zugeordneten Elementaufnahmen verrastbar sind.

Bei einer weiteren bevorzugten Ausführungsform der erfindungsgemäßen Filtervorrichtung ist zwischen Stützrohr und dem Filterkopf des Filtergehäuses ein Kraftspeicher, insbesondere eine Druckfeder, eingesetzt. Des weiteren befindet sich vorzugsweise zwischen dem Filtertopf und dem Filterelement ein weiterer Kraftspeicher, insbesondere eine Druckfeder, der auf die dem Filterkopf abgewandte Elementaufnahme einwirkt. Auf diese Art und Weise läßt sich auch bei schwellender Druckbeanspruchgung des Filterelementes ein Schlagen des Elementwechseleinsatzes in axialer Richtung verhindern, was gegebenenfalls sonst zu Beschädigungen führen würde.

Ein Filterelement für den Einsatz in einer Filtervorrichtung gemäß dem Vorbeschriebenen, wobei die Filtermatte als Hohlzylinder ausgebildet ist, weist mindestens an einem Ende ein Zwischenstück auf, das zusammen mit der Filtermatte von einem Stützrohr entfern- oder aufschiebbar ist. Das modular ausgelegte und aufgebaute Filterelement kann dabei mit Stützrohr und den Elementaufnahmen wiederverwendet werden und bei durch Verschmutzungen zugesetztem Filtermaterial wird kostengünstig und umweltschonend im wesentlichen nur die hohlzylinderartige verbrauchte Filtermatte gegen eine neue ausgewechselt.

Durch das am unteren Ende verschlossene Stützrohr in Verbindung mit einer elastischen Endkappe oder in Verbindung mit einem Anschlag für die Endkappe ergibt sich eine sichere Abstützung in axialer Richtung, was insbesondere bei hohen Drücken eine sichere Funktion der Filtervorrichtung gewährleistet.

Im folgenden ist die erfindungsgemäße Filtervorrichtung anhand verschiedener Ausführungsformen näher erläutert.

Es zeigen in prinzipieller und nicht maßstäblicher Darstellung die
- Fig.1: einen Längsschnitt durch eine erste Ausführungsform der Filtervorrichtung;
- Fig.2: ein in der Fig.1 mit "X" bezeichneten vergrößerten Detailausschnitt der Ausführungsform nach der Fig.1;
- Fig.3: einen in der Fig.1 mit "Y" bezeichneten vergrößerten Detailausschnitt der Ausführungsform nach der Fig.1;
- Fig.4: einen Längsschnitt einer zweiten Ausführungsform der Filtervorrichtung;
- Fig.5: einen Längsschnitt einer dritten Ausführungsform der Filtervorrichtung.

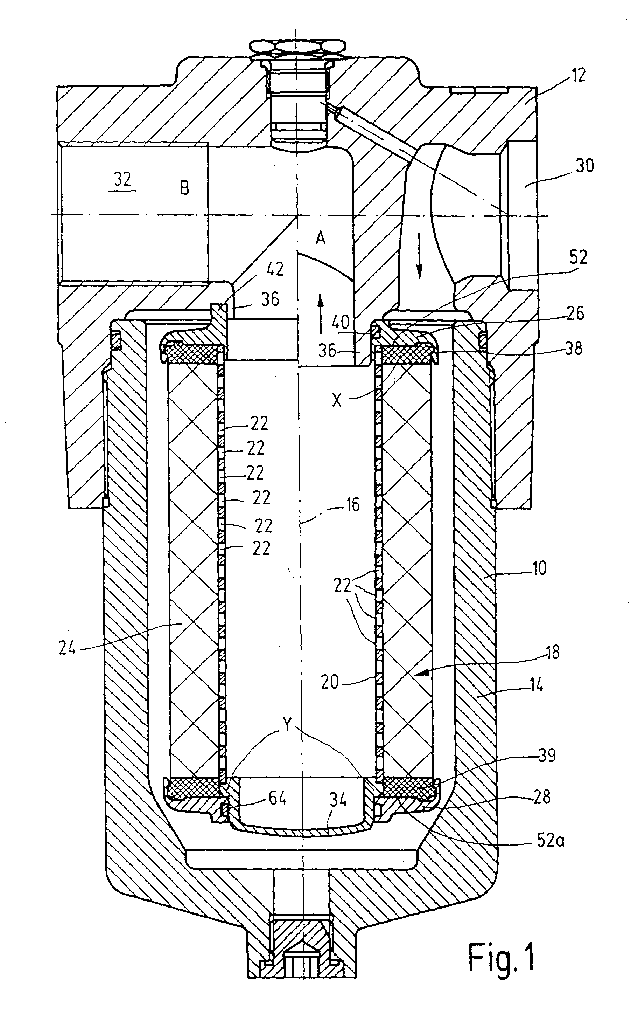

Die in der Fig.1 gezeigte Filtervorrichtung weist ein zweiteiliges Filtergehäuse 10 auf mit einem oben angeordneten Filterkopf 12 und einem darunterliegenden Filtertopf 14, der über ein Außengewinde in den Filterkopf 12 einschraubbar ist. Im Inneren des Filtertopfes 14 und in koaxialer Anordnung zu der Längsachse 16 des Filtergehäuses 10 ist ein als Ganzes mit 18 bezeichnetes Filterelement angeordnet. Das im wesentlichen einen Hohlzylinder ausbildende Filterelement 18, das beispielsweise aus einer plissierten Filtermatte gebildet sein kann, weist auf seiner Innenseite ein Stützrohr 20 aus Kunststoff oder Metall auf, das mit Durchlässen 22 versehen ist. Das Stützrohr 20 ist von einer Filtermatte 24 umgeben, die an ihren freien Enden mit Elementaufnahmen 26,28 versehen ist.

In dem Filterkopf 12 ist ein Einlaß 30 sowie ein Auslaß 32 vorhanden, die dem Eintritt der Schmutzflüssigkeit bzw. dem Auslaß der gereinigten Flüssigkeit aus der Filtervorrichtung dienen. Die Durchflußrichtung innerhalb des Filtergehäuses 10 ist in der Fig.1 mit Pfeilen angegeben. Die zu reinigende Schmutzflüssigkeit durchtritt mithin das Filterelement 18 von außen nach innen, und zwar über die Filtermatte 24 und die Durchlässe 22 des Stützrohres 20. Dabei hält die Filtermatte 24 die Verschmutzungen im Filtergewebematerial zurück. Das Stützrohr 20 ist an seinem dem Filterkopf 12 zugewandten Ende offen ausgeführt und ist an seinem anderen Ende durch einen Boden 34 verschlossen.

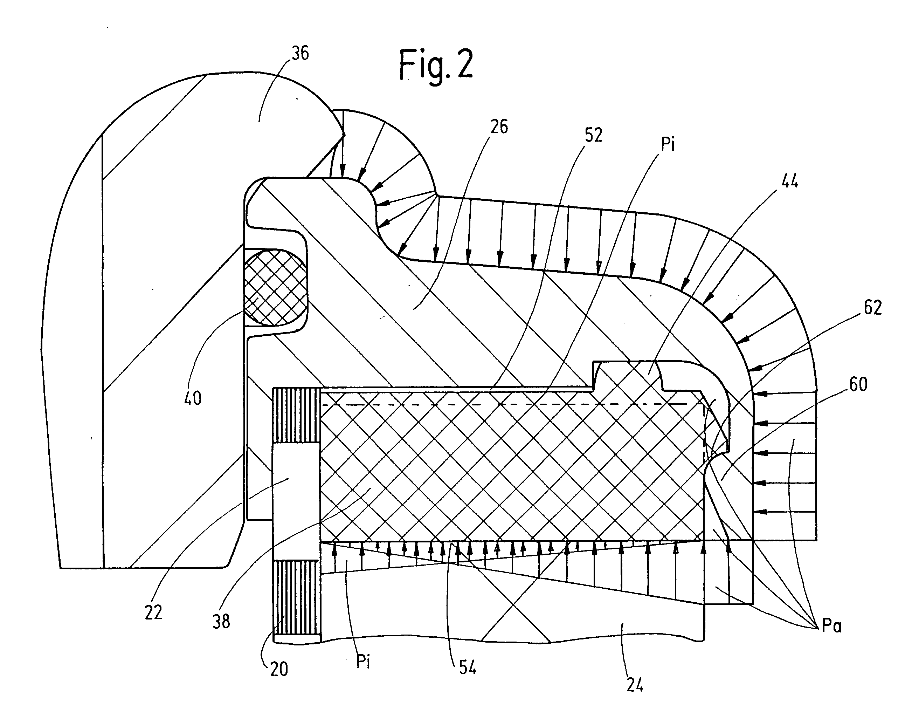

Die in Blickrichtung auf die Fig.1 gesehen obere Elementaufnahme 26 ist fest mit dem freien Ende des Stützrohres 20 im Bereich seiner Öffnung verbunden und damit in Anlage mit einem Innenstutzen 36 des Filterkopfes 12. Rechts und links von der Längsachse 16 sind dabei zwei verschiedene Ausführungsformen einer Elementaufnahme 26 sowie eines zugeordneten Innenstutzens 36 gezeigt, worauf noch näher eingegangen werden wird. Zwischen dem Ende der Filtermatte 24 und der ringförmigen Elementaufnahme 26 ist ein ringförmiges Zwischenstück 38 angeordnet, das vergrößert in der Fig.2 wiedergegeben ist und das kappenartig das obere freie Ende der Filtermatte 24 randseitig übergreift und umfaßt.

Dieses Zwischenstück 38 liegt stirnseitig an dem freien Ende im oberen Bereich der Filtermatte 24 an und ist mit dieser beispielsweise über eine Klebverbindung od.dgl. fest verbunden. Die in Blickrichtung auf die Fig.1 gesehen rechts dargestellte Art einer Elementaufnahme 26 weist einen Innendichtring 40 auf, der in einer Nut der Elementaufnahme 26 verläuft, wobei bei dieser Ausführungsform durch radiale Klemmung und Abdichtung das Filterelement 18 an dem zugeordneten Innenstutzen 36 des Filterkopfes 12 gehalten ist.

Bei der in Blickrichtung auf die Fig.1 links dargestellten Ausführungsform der oberen Elementaufnahme 26 ist diese über einen flanschartigen Mittensteg 42 in einer zugeordneten Nut des Filterkopfes 12 eingreifend mit dieser verbunden und integrierter Bestandteil des Filterkopfes 12. Da bei dieser Ausbildung die oben beschriebene radiale Abdichtung entfallen kann, kann der mit "A" bezeichnete Anströmquerschnitt vergrößert werden, so daß im Sinne einer strömungsgünstigen Führung der mit "B" bezeichnete Abströmquerschnitt dem Anströmquerschnitt "A" gleichgesetzt werden kann.

Wie die vergrößerte Darstellung nach der Fig.2 ergibt, die einen in der Fig.1 mit "X" bezeichneten Ausschnitt darstellt, dichtet das Zwischenstück 38 über einen ringförmig aufgeschäumten oder eingelegten Dichtring 44 ab (Fig.2), der auf der Oberseite und außenumfangsseitig an dem Zwischenstück 38 stirnseitig vorstehend angeordnet ist. Dieser Dichtring 44 kann über einen Spannring od.dgl. vorgespannt sein, der längs einer parallel zur Längsachse 16 verlaufenden Anlagefläche innenumfangsseitig sowohl in das Zwischenstück 38 als auch über eine zugeordnete Nut in die Elementaufnahme 26 eingreift, die wiederum über ihren Mittensteg 42 an dem Filterkopf 12 festgelegt ist. Zwischen dem oberen Ende der Filtermatte 24 und der Unterseite des Zwischenstückes 38 verbleibt gemäß der Darstellung nach der Fig.2 ein mit 54 bezeichnetes Klebstoffbett.

Mit der Ausgestaltung einer Elementaufnahme nach der Fig.2 ist eine sichere axiale Abstützung zum Bewältigen hoher Differenzdrücke realisiert, wobei die axiale Abstützung über die Endkappe 26 erfolgt und nicht, wie im Stand der Technik, wo lediglich der Filtereinsatz die Abstützung von Axialkräften übernimmt. Darüber hinaus ist über den Spalt 52 eine vorspannbare Axialabdichtung realisiert, wobei die im Filtrierbetrieb entstehenden Druckverhältnisse am Element in der Fig.2 mit Pi und Pa graphisch wiedergegeben sind, wobei Pi dem Innendruck innerhalb des Filterelementes und Pa dem Fluidaußendruck entspricht. Die Vergrößerung der Vorspannung und somit eine größere Dichtheit durch Schließen des Spaltes 52 bei ansteigendem Differenzdruck Δp = Pa - Pi wird allein durch den Fluiddruck des Mediums auf das Zwischenstück 38 und die Elementaufnahme 26 erreicht. Durch die Anordnung der nachgiebigen Dichtung 44 am äußeren Rand des Filtereinsatzes ist es ermöglicht, daß das Zwischenstück 38 vom Außendruck unter Schließen des Spaltes 52 gegen die Elementaufnahme 26 gedrückt werden kann. Durch die hieraus resultierende Vorspannung ergibt sich die erhöhte Dichtheit und durch die axiale Abstützung der Elementaufnahmen 26 werden keine Axialkräfte auf den Filtereinsatz übertragen.

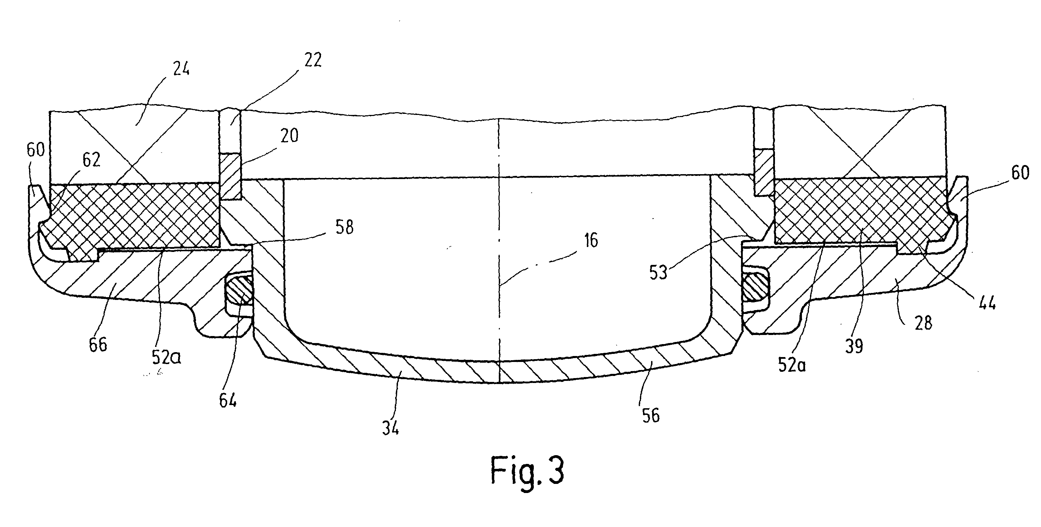

Wie die Fig.3 zeigt, läßt sich ein dahingehender Radialspalt 52a auch am entgegengesetzten Ende am Filterelement 18 anordnen. Auch hierbei umfassen die jeweiligen Zwischenstücke 38 das Stützrohr 20 im Bereich seiner freien Enden außenumfangsseitig. Ferner ist am jeweils freien Ende einer jeden Elementaufnahme 26,28 ein Rastvorsprung 60 angeordnet, der eine jeweils zugeordnete Rastausnehmung 62 an den beiden Zwischenstücken 38,39 zum Herstellen einer Rastverbindung zwischen den genannten Bauteilen hintergreift. Sofern die Elementaufnahmen 26,28 aus einem elastisch nachgiebigen Kunstoff od.dgl. gebildet sind, läßt sich die dahingehende Schnapp- oder Rastverbindung von Hand ohne weiteres lösen. Wie insbesondere die Fig.3 zeigt, ist die untere Elementaufnahme 28 zweiteilig ausgebildet und das Deckelteil 56, das den Boden 34 bildet, ist über einen weiteren Dichtring 64 gegenüber dem sonstigen Elementaufnahmering 66 dichtend mit diesem in Anlage.

Für einen Elementwechsel wird zunächst der Filtertopf 14 vom Filterkopf 12 abgeschraubt. Anschließend läßt sich nach Lösen des Sicherungs- oder Spannringes die Filtermatte 24 mit der unteren Elementaufnahme 28 und dem Zwischenstück 38 von Hand von der Außenseite des Stützrohres 20 abziehen, wobei das Stützrohr 20 über die obere Elementaufnahme 26 mit dem Filterkopf 12 verbunden weiter Bestandteil des Filtergehäuses 10 bleibt. Eine neu einzusetzende Filtermatte 24 läßt sich dann über das Stützrohr 20 aufgeschoben über den Spannring mit der oberen Elementaufnahme 26 verbinden und nach Einschrauben des Filtertopfes 14 in den Filterkopf 12 ist die Filtervorrichtung für einen erneuten Filtriervorgang bereit.

Bei der Ausführungsform nach der Fig.1 sind an den beiden freien Enden der Filtermatte 24 die Zwischenstücke 38,39 angeordnet, die Ringe ausbildend an die Filtermatte 24 anschäumbar sind. Die Zwischenstücke 38,39 können insbesondere aus PU- oder Silikonschaum bestehen; ein gummielastisches Material wäre aber gleichfalls denkbar. In Blickrichtung auf die Fig.1 gesehen werden oben und unten die beiden ringförmigen Zwischenstücke 38,39 von den kappenartigen Elementaufnahmen 26 und 28 umfaßt, wobei, wie dies insbesondere die Fig.2 und 3 zeigen, stirnseitig zwischen den einander zugewandten Flächen von Zwischenstücken 38,39 und Elementaufnahmen 26 bzw. 28 ein Spiel jeweils in Form der bereits angesprochenen Ringspalte 52,52a vorhanden ist, sofern die Filtervorrichtung außer Betrieb ist. Der jeweilige Spalt 52,52a wird erst nach Inbetriebnahme durch den anstehenden Fluiddifferenzdruck geschlossen, wobei der Gesamtdruckverlauf sich in Blickrichtung auf die Fig.2 gesehen durch die an der Unterseite des Zwischenstückes 38 angreifenden und gegenseitig keilförmig verlaufenden Differenzdrücke Pi,Pa ergibt.

Ist das Kleinstmaß der Einbaulänge des Filterelementes 18 erreicht, berührt die untere Elementaufnahme 28 den flanschartigen Anschlag 53 des vorgestülpten Deckelteiles 56, das das Stützrohr 20 nach unten hin abschließt und Teil der in diesem Fall mehrteiligen unteren Elementaufnahme 28 ist. Dabei bleibt der untere Ringspalt 52a erhalten. Wird das Größtmaß der Länge des Filterelementes 18 erreicht, entsteht ein Spalt 58 zwischen dem Anschlag 53 und der unteren Elementaufnahme 28 in diesem Bereich, der die doppelte axiale Länge des unteren Ringspaltes 52a jedoch nicht überschreitet. Wird das Filterelement 18 wiederum mit einem äußeren Überdruck bei Inbetriebnahme der Filtervorrichtung beaufschlagt, der beispielsweise der Druckfifferenz Δp bei verschmutzter Filtermatte 24 entspricht, wird bei einer Filtermatte 24 mit dem bereits angesprochenen Kleinstmaß die Axialkraft der unteren Elementaufnahme 28 direkt über den Anschlag 53 in das Deckelteil 56 der unteren Elementaufnahme 28 eingeleitet und anschließend weiter über diesen Deckelteil in das Stützrohr 20. Bei Verwendung einer Filtermatte 24 mit Größtmaß wird die Axialkraft der unteren Elementaufnahme die beiden Dichtwülste 44 der Filtermatte 24 weiterverformen, bis die Ringspalte 52,52a oben und unten geschlossen sind und die untere Elementaufnahme 28 den Anschlag 53 berührt. Eventuell darüber hinausgehende Axialkräfte werden dann wiederum über das Stützrohr 20 abgeleitet werden. Somit können die Belastungen der Filtermatte 24 in axialer Richtung minimiert werden. Bei einem Elementwechsel können wiederum alle Teile des Elementwechseleinsatzes wiederverwendet werden.

Die nachfolgenden Ausführungsformen der Filtervorrichtung werden nur noch insofern erläutert, als sie sich wesentlich von der eben beschriebenen Ausführungsform unterscheiden, wobei vergleichbare Bauteile mit denselben Bezugszeichen, die aber für jede nachfolgende Ausführungsform um 100 erhöht sind, wiedergegeben werden. Die vorstehend getroffenen Ausführungen gelten dann auch insofern für die nachfolgenden Ausführungsformen.

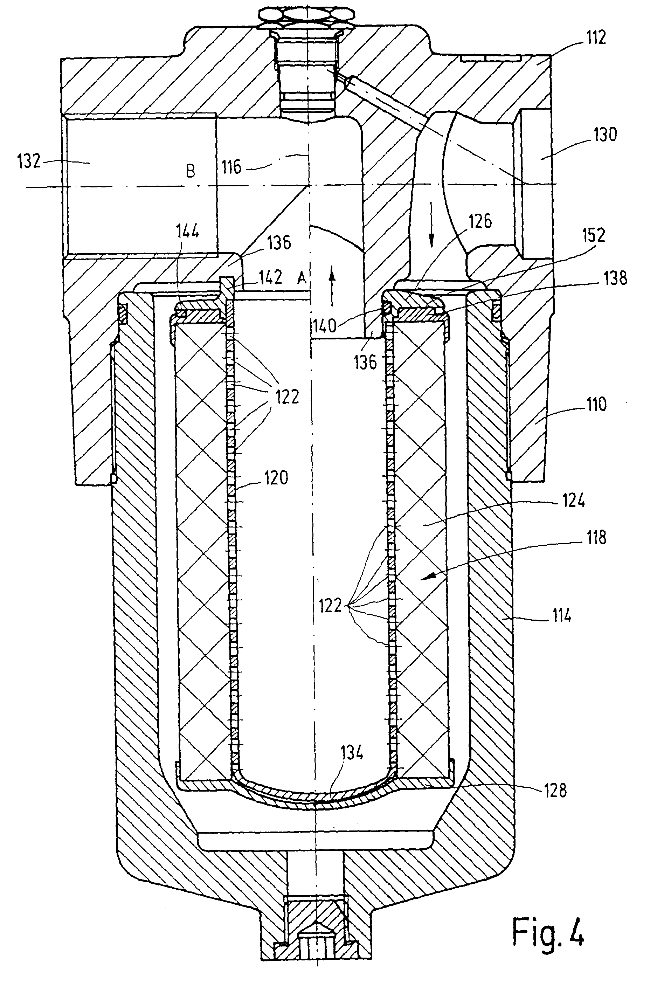

Bei der Ausführungsform nach der Fig.4 ist der das Filterelement 118 nach unten hin abschließende Boden 134 aus einem sog. Klöpperboden gebildet. Die dem Klöpperboden 134 unter Anlage gegenüberliegend elastisch ausgebildete untere Elementaufnahme 128 schmiegt sich an diesen an und verhindert somit ein schädliches Übertragen von Axialkräften auf den Filtereinsatz.

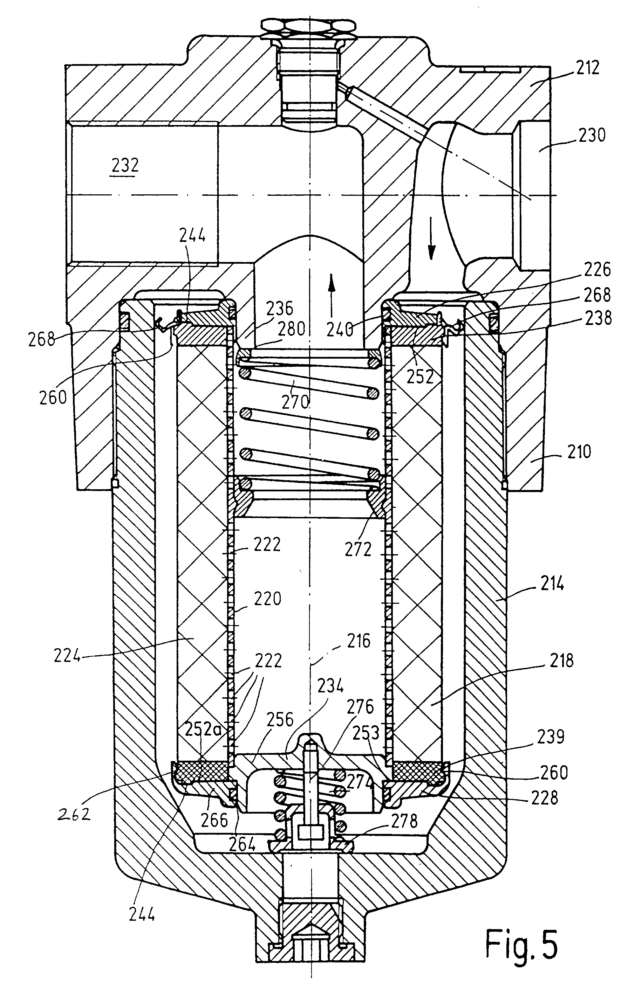

Bei der nachstehend beschriebenen dritten Ausführungsform nach der Fig.5 weist die mit dem Filterkopf 212 verbindbare Elementaufnahme 226 Mitnehmerelemente 268 auf, die unter der Wirkung eines Kraftspeichers, hier in Form von Federelementen, in kraftschlüssige Anlage mit dem Filtertopf 214 entlang seines Innenumfanges bringbar sind. Aufgrund der eine Art Halteklammern ausbildenden Mitnehmerelemente 268 läßt sich bei geringfügiger Relativbewegung zwischen Filterelement 218 und Filtertopf 214 dieser zusammen mit dem Filterelement aus dem Filtergehäuse 210 entfernen. Ferner zentrieren die Mitnehmerelemente 268 den Filterelementeinsatz 218 innerhalb des Filtertopfes 214.

Zwischen Stützrohr 220 und dem Filterkopf 212 ist ein Kraftspeicher 270 in Form einer Druckfeder eingesetzt, die sich mit ihrem einen freien Ende an der Unterseite des Stutzens 236 des Filterkopfes 212 abstützt und mit ihrem anderen Ende an einem Ringflansch 272, der auf der Innenseite des Stützrohres 220 im oberen Drittel angeordnet und mit diesem fest verbunden ist. Zwischen dem Filtertopf 214 und dem Filterelement 218 ist ein weiterer Kraftspeicher 274 wiederum in Form einer Druckfeder angeordnet, der auf die dem Filterkopf 212 abgewandte Elementaufnahme 228 und insbesondere auf ihren Deckelteil 256 einwirkt, der in der vorliegenden Ausführungsform in Richtung des Inneren des Stützrohres 220 ausgewölbt ist. Innerhalb des weiteren Kraftspeichers 274 ist eine Haltestange 276 angeordnet, die in das Deckelteil 256 eingeschraubt ist und mit ihrem Schraubenkopf unter Bildung eines Anschlages in einem Gehäuseteil 278 verfahrbar angeordnet ist. Die Druckfeder 274 stützt sich dabei mit ihrem einen freien Ende an dem Deckelteil 256 und mit ihrem anderen freien Ende an einer ringförmigen Verbreiterung des Gehäuseteiles 278 ab, wobei die maximale Längenausdehnung der Druckfeder 274 durch den Schraubenkopfanschlag der Haltestange 276 begrenzt ist.

Zur Montage des Elementwechseleinsatzes 218 wird dieser zunächst in den Filtertopf 214 gestellt, wobei die Halteklammern oder Mitnehmerelemente 268 den angesprochenen Einsatz im Filtertopf 214 mittig zentrieren. Der Wechseleinsatz stützt sich dabei über das Gehäuseteil 278 am Boden des Filtertopfes 214 ab. Anschließend wird der Filtertopf 214 in den Filterkopf 212 geschraubt. Sobald der Elementwechseleinsatz 218 den Innenstutzen 236 des Filterkopfes 212 erreicht, wird dieser Innenstutzen die Druckfeder 270 über einen Führungsring 280 vorspannen, wobei die in Blickrichtung auf Fig.5 gesehen obere Elementaufnahme 226 außenumfangsseitig über den Stutzen 236 gleitet und eine Abdichtung über den O-Ring 240 erfolgt. Nachdem der Elementwechseleinsatz am Filterkopf 212 auf Anschlag gegangen ist, wird die Druckfeder 274 so lange über das Gehäuseteil 278 vorgespannt, bis der Filtertopf 214 im Filterkopf 212 auf Anschlag geht.

In dieser angesprochenen Position ist dann die Vorspannkraft der Spann- oder Druckfeder 274 größer als die Vorspannkraft der Druck- oder Abdrückfeder 270. Hierdurch wird verhindert, daß das Element während des Betriebes durch die Druckfeder 270 vom Filterkopf 212 weggedrückt werden kann. Dies würde insbesondere bei schwellender Druckbelastung des Filterelementes 218 durch das zu filternde Fluid zum Schlagen des gesamten Elementwechseleinsatzes in axialer Richtung und somit zu Beschädigungen führen. Eine Demontage des Elementwechseleinsatzes erfolgt in umgekehrter Reihenfolge, wobei dann zuerst sich die Druckfeder 274 entspannt. Anstelle der mehrteiligen unteren Elementaufnahme 228 kann diese auch einstückig ausgebildet sein. Nach Lösen der oberen und unteren Elementaufnahme 226 bzw. 228 über die bereits angesprochene Rastverbindung 260,262 läßt sich die Filtermatte 224 wiederum mit dem ringförmigen Zwischenstücken 238,239 vom Stützrohr 220 für einen Mattenwechsel austauschen.

Durch die Erhöhung der Dichtheit im Bereich der Elementaufnahmen über die mit der vorbeschriebenen Lösung erzielbare Vorspannung sowie die axiale Abstützung der Elementaufnahmen werden keine schädigenden Axialkräfte gegenüber dem Stand der Technik auf den Filtereinsatz übertragen und Leckagen auch im Hochdruckbereich mit Sicherheit vermieden.

## Patentansprüche

1. Filtervorrichtung mit einem mehrteiligen Filtergehäuse (10,110,210), das einen Filterkopf (12,112,212) aufweist, der mit einem Filtertopf (14,114,214) verbindbar ist, der mindestens ein Filterelement (18,118,218) aufweist, das ein Stützrohr (20,120,220) hat, das von einer Filtermatte (24,124,224) umgeben ist, die an ihren freien Enden mit Elementaufnahmen (26,28,126,128,226,228) versehen ist, wobei mindestens eine der Elementaufnahmen (26,126,226) fest mit dem Stützrohr (20,120,220) verbunden und in Anlage mit dem Filterkopf (12,112,212) bringbar ist und wobei zumindest an dem Ende der Filtermatte (24,124,224), das die mit dem Filterkopf (12,112,212) verbundene Elementaufnahme (26,126,226) aufweist, zwischen dieser und diesem Ende der Filtermatte (24,124,224) ein Zwischenstück (38,138,238) angeordnet ist, das zusammen mit der Filtermatte (24,124,224) von dem Stützrohr (20,120,220) entfernbar ist, das mit dem Filterkopf (12,112,212) verbunden an diesem verbleibt, dadurch gekennzeichnet, daß zumindest zwischen einem Teil der Zwischenstücke (38,39,138,238,239) und den zugeordneten Elementaufnahmen (26,28,126,226,228) bei auf dem Stützrohr (20,120,220) aufgesetzter Filtermatte (24,124,224) in axialer Aufsetzrichtung eine Fluiddurchtrittsstelle, in Form eines Spaltes (52,52a,152,252,252a) besteht, die nach Inbetriebnahme durch den anstehenden Fluiddifferenzdruck schließbar ist.

2. Filtervorrichtung nach Anspruch 1, dadurch gekennzeichnet, daß im Bereich der beiden Enden des Stützrohres (20,220) jeweils in axialer Aufsetzrichtung der aufsetzbaren Filtermatte (24,224) die Durchtrittsstelle, insbesondere der Spalt (52,52a,252,252a) besteht.

3. Filtervorrichtung nach Anspruch 1 oder 2, dadurch gekennzeichnet, daß die mit dem Filterkopf (12,112) verbundene Elementaufnahme (26,126) integrierter Bestandteil des Filtergehäuses (10,110) ist oder mit radialer Vorspannung auf einen Innenstutzen (36,136,236) des Filterkopfes (12,112,212) aufschiebbar ist.

4. Filtervorrichtung nach einem der Ansprüche 1 bis 3, dadurch gekennzeichnet, daß das zwischen der mit dem Filterkopf (12) verbundenen Elementaufnahme (26) und dem Filtermattenende angeordnete Zwischenstück (38) kappenartig dieses Filtermattenende übergreift und lösbar mit dieser Elementaufnahme (26) fest verbunden ist und/oder daß in axialer Aufsetzrichtung der Filtermatte (24,124,224) das Zwischenstück (38,138,238) eine elastisch nachgiebige Dichtung (44,144,244) aufweist, die in Anlage mit der Elementaufnahme (26,126,226) bringbar ist.

5. Filtervorrichtung nach einem der Ansprüche 1 bis 4, dadurch gekennzeichnet, daß zumindest ein Teil der Zwischenstücke (38,39,138,238,239) geschäumte Bauteile darstellen, die elastisch nachgiebig sind und insbesondere aus PU- oder Silikonschaum bestehen.

6. Filtervorrichtung nach einem der Ansprüche 1 bis 5, dadurch gekennzeichnet, daß die mit dem Filterkopf (212) verbundbare Elementaufnahme (226) Mitnehmerelemente (268) aufweist, die unter der Wirkung eines Kraftspeichers in Anlage mit dem Filtertopf (214) bringbar sind.

7. Filtervorrichtung nach einem der Ansprüche 1 bis 6, dadurch gekennzeichnet, daß das dem Filterkopf (12,212) abgewandte Ende des Filterelementes (18,218) von einer Elementaufnahme (28,228) abgeschlossen ist, die mehrteilig ausbildbar ist und jeweils zugeordnete Zwischenstücke (39,239) kappenartig umfaßt.

8. Filtervorrichtung nach einem der Ansprüche 1 bis 7, dadurch gekennzeichnet, daß die jeweiligen Zwischenstücke (38,39,238,239) über eine Rastverbindung (60,62,260,262) mit den zugeordneten Elementaufnahmen (26,28,226,228) verrastbar sind.

9. Filtervorrichtung nach einem der Ansprüche 1 bis 8, dadurch gekennzeichnet, daß zwischen Stützrohr (220) und dem Filterkopf (212) ein Kraftspeicher (270), insbesondere eine Druckfeder eingesetzt ist.

10. Filtervorrichtung nach Anspruch 9, dadurch gekennzeichnet, daß zwischen dem Filtertopf (214) und dem Filterelement (218) ein weiterer Kraftspeicher (274), insbesondere eine Druckfeder, angeordnet ist, der auf die dem Filterkopf (212) abgewandte Elementaufnahme (228) einwirkt.

## Claims

1. A filter device with a multi-part body (10, 110, 210) which has a filter head (12, 112, 212) which can be connected to a filter casing (14, 114, 214) with a supporting tube (20, 120, 220) surrounded by a filter mat (24, 124, 224) provided at its open end with element locators (26, 28, 126, 128, 226, 228), at least one of the element locators (26, 126, 226) being firmly connected with the supporting tube (20, 120, 220) capable of abutting against the filter head (12, 112, 212), and having the element locator (26, 126, 226) at least at the end of the filter mat, an adaptor (38, 138, 238) being arranged between it and this end of the filter mat (24, 124, 224) which can be removed from the supporting tube (20, 120, 220) together with the filter mat (24, 124, 224), the sup[porting tube remaining attached to the filter head (12, 112, 212), characterised by the fact that a fluid passage in the form of a gap (52, 52a, 152, 252, 252a) exists at least between one part of the adaptors (38, 39, 138, 238, 239) and the associated element locators (26, 28, 126, 226, 228) at the filter mat (24, 124, 224) placed axially on the supporting tube (20, 120, 220), the fluid passage being closable by the differential pressure of the fluid after putting into operation.

2. A filter device according to Claim 1, characterised by the fact that the passage, in particular the gap (52, 52a, 252, 252a) is present in the area of each of the two ends of the supporting tube (20, 220). in the direction in which the insertable filter pad (24, 224) is placed axially into position.

3. A filter device according to Claim 1 or 2, characterised by the fact that the element locator (26, 126) connected with the filter head (12, 112) forms an integral part of the filter body (10, 110) or is slidable onto an internal socket (36, 136, 236) of the filter head (12, 112, 212).

4. A filter device according to one of the Claims 1 to 3, characterised by the fact that an adaptor (38) arranged between the element locator (26) and the end of the filter mat extends over this end of the filter mat in the form of a cap and is firmly attached to this element locator (26) while being detachable and/or that the adaptor (38, 138, 238) has a flexible seal (44, 144, 244) in the axial direction in which the filter pad (24, 124, 224) is inserted, the seal being capable of being moved to rest against the element locator (26, 126, 226).

5. A filter device according to one of the Claims 1 to 4, characterized by the fact that at least some of the adaptors (38, 39, 138, 238, 239) are parts made from foam which are flexible and are made in particular from PU or silicone foam.

6. A filter device according to one of the Claims 1 to 5, characterised by the fact that the element locator (226) which is connectable to the filter head (212) has drive elements (268) which, when actuated by an accumulator, can be brought to bear against the filter head (214).

7. A filter device according to Claims 1 to 6, characterised by the fact that the end of the filter element (18, 218) pointing away from the filter head (12, 212) is closed by an element locator (28, 228) which can be made of several parts and comprises associated adaptors (39, 239) in the form of a cap.

8. A filter device according to one of the Claims 1 to7, characterised by the fact that the respective adaptors (38, 39, 238, 239) can be locked with the associated element locators (26, 28, 226, 228) by means of a locking connection (60, 62, 260, 262).

9. A filter device according to one of the Claims 1 to 8, characterised by the fact that an accumulator (270), in particular a thrust spring, is fitted between the supporting tube (220) and the filter head (212).

10. A filter device according to Claim 9, characterised by the fact that a further accumulator (274), in particular a thrust spring, is arranged between the filter head (214) and the filter element (218), which acts on the element locator (228) pointing away from the filter head (212).

## Revendications

1. Dispositif filtrant avec un boîtier de filtre (10, 110, 210) en plusieurs parties, qui présente une tête de filtre (12, 112, 212) pouvant être reliée à un pot de filtre (14, 114, 214), lequel présente au moins un élément filtrant (18, 118, 218) qui a un tube support (20, 120, 220) entouré par un mat filtrant (24, 124, 224), lequel est pourvu de logements d'élément (26, 28, 126, 128, 226, 228) sur ses extrémités libres, au moins l'un des logements d'élément (26, 126, 226) étant relié de façon fixe au tube support (20, 120, 220) et pouvant être amené en contact avec la tête de filtre (12, 112, 212) et une pièce intermédiaire (38, 138, 238) étant disposée au moins sur l'extrémité du mat filtrant (24, 124, 224), qui présente le logement d'élément (26, 126, 226) relié à la tête de filtre (12, 112, 212), entre ce logement et cette extrémité du mat filtrant (24, 124, 224), laquelle pièce intermédiaire peut être enlevée en même temps que le mat filtrant (24, 124, 224) du tube support (20, 120, 220) qui reste relié à la tête de filtre (12, 112, 212) sur celle-ci, caractérisé en ce que, au moins entre une partie des pièces intermédiaires (38, 39, 138, 238, 239) et les logements d'élément (26, 28, 126, 226, 228) associés, il y a sur le mat filtrant (24, 124, 224) posé sur le tube support (20, 120, 220), dans le sens de pose axial, un point de passage du fluide sous la forme d'une fente (52, 52a, 152, 252, 252a) qui peut être fermé après la mise en service par la pression différentielle de fluide existante.

2. Dispositif filtrant selon la revendication 1, caractérisé en ce que le point de passage, en particulier la fente (52, 52a, 252, 252a) existe dans la zone des deux extrémités du tube support (20, 220) respectivement dans le sens de pose axial du mat filtrant (24, 224) qui peut être posé.

3. Dispositif filtrant selon la revendication 1 ou 2, caractérisé en ce que le logement d'élément (26, 116) relié à la tête de filtre (12, 112) est un composant intégré du boîtier de filtre (10, 110) ou peut être enfilé avec une prétension radiale sur une tubulure intérieure (36, 136, 236) de la tête de filtre (12, 112, 212).

4. Dispositif filtrant selon l'une quelconque des revendications 1 à 3, caractérisé en ce que la pièce intermédiaire (38) disposée entre le logement d'élément (26) relié à la tête de filtre (12) et l'extrémité du mat filtrant recouvre cette extrémité de mat filtrant à la façon d'un capuchon et est relié à demeure de façon amovible avec ce logement d'élément (26) et/ou que la pièce intermédiaire (38, 138, 238) présente dans le sens de pose axial du mat filtrant (24, 124, 224) un joint (44, 144, 244) souple et élastique qui peut amené en contact avec le logement d'élément (26, 126, 226).

5. Dispositif filtrant selon l'une quelconque des revendications 1 à 4, caractérisé en ce qu'au moins une partie des pièces intermédiaires (38, 39, 138, 238, 239) présente des composants moussés qui sont souples et élastiques et sont en particulier à base de mousse de polyuréthane ou de mousse de silicone.

6. Dispositif filtrant selon l'une quelconque des revendications 1 à 5, caractérisé en ce que le logement d'élément (226) pouvant être relié à la tête de filtre (212) présente des éléments d'entraînement (268) qui peuvent être amenés sous l'effet d'un accumulateur d'énergie en contact avec le pot de filtre (214).

7. Dispositif filtrant selon l'une quelconque des revendications 1 à 6, caractérisé en ce que l'extrémité, opposée à la tête de filtre (12, 212), de l'élément filtrant (18, 218) est fermée par un logement d'élément (28, 228) qui peut être réalisé en plusieurs parties et entoure des pièces intermédiaires (39, 239) respectivement associés à la façon de capuchons.

8. Dispositif filtrant selon l'une quelconque des revendications 1 à 7, caractérisé en ce que les pièces intermédiaires (38, 39, 238, 239) respectifs peuvent être reliés par enclenchement au moyen d'une liaison par crantage (60, 62, 260, 262) avec les logements d'élément (26, 28, 226, 228) associés.

9. Dispositif filtrant selon l'une quelconque des revendications 1 à 8, caractérisé en ce qu'un accumulateur d'énergie (270), en particulier un ressort de pression, est inséré entre le tube support (220) et la tête de filtre (212).

10. Dispositif filtrant selon la revendication 9, caractérisé en ce qu'un autre accumulateur d'énergie (274), en particulier un ressort de pression, qui agit sur le logement d'élément (228) opposé à la tête de filtre (212), est disposé entre le pot de filtre (214) et l'élément filtrant (218).
